Europäisches Patentamt

European Patent Office

Office européen des brevets

(19)

(11) **EP 0 588 688 B1**

(12) **FASCICULE DE BREVET EUROPEEN**

(45) Date de publication et mention
de la délivrance du brevet:
**06.11.1996 Bulletin 1996/45**

(51) Int Cl.⁶: **G01S 7/292**

(21) Numéro de dépôt: **93402176.7**

(22) Date de dépôt: **07.09.1993**

(54) **Procédé et dispositif de réglage du seuil de détection d'un radar**

Verfahren und Vorrichtung zur Regelung des Entdeckungspegels für ein Radar

Method and device for controlling the detection's threshold of a radar

(84) Etats contractants désignés:
**DE DK FR GB**

(30) Priorité: **18.09.1992 FR 9211144**

(43) Date de publication de la demande:
**23.03.1994 Bulletin 1994/12**

(73) Titulaire: **THOMSON-CSF**
**75008 Paris (FR)**

(72) Inventeur: **Ghignoni, Jean-François**
**F-92402 Courbevoie Cedex (FR)**

(74) Mandataire: **Beylot, Jacques et al**
**Thomson-CSF**
**SCPI**
**B.P. 329**
**92402 Courbevoie Cédex (FR)**

(56) Documents cités:
**EP-A- 0 062 519      US-A- 4 956 792**

## Description

La présente invention concerne le réglage du seuil de détection d'un radar pour éliminer au mieux les échos parasites connus sous la dénomination générale de clutter tout en désensibilisant le moins possible le radar pour éviter la perte de cibles intéressantes. Elle relève de la technique connue sous le sigle TFAC (Taux de Fausse Alarme Constant) également désignée en notation anglo-saxonne par le sigle CFAR (Constant False Alarm Rate). Elle est relative notamment au réglage du seuil d'extraction de cible d'un radar panoramique de patrouille maritime.

En technique radar, une cible observable est celle qui donne lieu à un écho dépassant en amplitude le bruit environnant. Pour la détecter au milieu du bruit, il est nécessaire de fixer un seuil de détection inférieur à l'amplitude de son écho et supérieur à l'amplitude du bruit environnant. Etant donnée la nature aléatoire du bruit, ce seuil est fixé en fonction d'un taux de fausse alarme acceptable que l'on cherche à rendre constant malgré les différentes lois de densité de probabilité que peut adopter le clutter notamment le clutter de mer.

Un signal de réception radar, pour être exploité, est échantillonné en fonction du temps, les échantillons étant regroupés par catégories intéressant chacune une même case correspondant à une direction de pointage donnée du radar et à une distance donnée de cible dans cette direction de pointage. Une manière connue de régler le seuil de détection dans une case distance-pointage consiste à apprécier la valeur moyenne du signal reçu sur les cases distance-pointage entourant la case distance-pointage considérée pour une même direction de pointage et des distances inférieures et supérieures, et à adopter comme seuil de détection deux à quatre fois cette valeur moyenne.

Cette méthode de calcul de seuil de détection a pour inconvénient de nécessiter beaucoup de calculs pour un radar panoramique présentant un nombre élevé de cases distance-pointage. En outre, dans le cas d'un radar de patrouille maritime, les échos des côtes qui sont puissants font monter la valeur du seuil de détection de sorte que le radar a une sensibilité plus faible dans la zone côtière.

Pour diminuer l'importance des calculs, on peut penser à partager le domaine surveillé par le radar en secteurs regroupant chacun plusieurs cases distance-pointage sur lesquelles le clutter reste homogène et à adopter, pour chaque secteur, un seuil de détection S respectant une probabilité de fausse alarme Pfa de consigne. Pour cela, on pourrait établir dans chaque secteur, l'histogramme de clutter qui, si l'on considère que les signaux retournés par les cibles intéressantes sont l'exception, se confond avec l'histogramme reliant les valeurs possibles x des modules des signaux reçus par le radar sur le secteur considéré, à leurs fréquences y d'apparition, et déterminer le seuil S à partir de la relation de définition du taux de fausse alarme Pfa qui est la limite, quand le nombre total N d'évènements répertoriés dans l'histogramme tend vers l'infini, de l'intégrale :

$$\frac{1}{N} \int_{s}^{\infty} y(x)\,dx$$

Malheureusement, si l'on veut limiter l'importance des calculs, il faut limiter la quantité d'évènements répertoriés dans l'histogramme ce qui conduit à une imprécision trop grande sur le comportement de l'histogramme pour les fortes valeurs des modules des signaux reçus pour que l'on puisse déduire de la relation :

$$Pfa = \frac{1}{N} \int_{s}^{\infty} y(x)\,dx$$

une valeur de seuil significative.

Dans le cas où la loi de densité de probabilité f(x) suivie par le clutter est connue, on tourne cette difficulté en remplaçant dans la relation de définition de la probabilité de fausse alarme Pfa l'histogramme y(x) par la loi de densité de probabilité f(x). Il vient :

$$Pfa = \int_{s}^{\infty} f(x)\,dx$$

C'est la méthode connue de moyennage, désignée en notation anglo-saxonne par "cell average" qui est utilisée lorsque le clutter a pour origine principale un bruit thermique et présente une loi de densité de probabilité de type loi de Rayleigh

$$f(x) = \frac{2x}{m_2} \exp\left(-x^2/m_2\right)$$

où $m_2$ est la moyenne quadratique. Dans cette méthode, on calcule sur chaque secteur la moyenne et on en déduit la moyenne quadratique du clutter par un rapport de 1,25, ce qui permet de préciser la loi de Rayleigh applicable puis on obtient le seuil S à partir de tables de valeurs répertoriant les résultats provenant de la mise en oeuvre de la relation (1) pour les différentes valeurs possibles de la probabilité de fausse alarme de consigne et de la moyenne quadratique.

Cette méthode de moyennage n'est cependant pas utilisable dans le cas d'un radar de patrouille maritime soumis à un clutter inhomogène qui dépend de l'état de la mer et de la direction du vent dominant et dont la loi de densité de probabilité répond à une loi de type log-normale à faible distance du radar, cela d'autant plus que la mer est formée, et à une loi de type de Rayleigh au delà d'une certaine distance dite de transition. En outre, elle ne résout pas le problème posé par les échos des côtes car ceux-ci sont trop nombreux dans certains secteurs pour rester une exception et ont une influence non négligeable sur la moyenne quadratique des modules des signaux reçus attribués au clutter.

La présente invention a pour but de lutter contre les divers inconvénients précités et, notamment de contourner la difficulté due à la mauvaise connaissance du comportement de l'histogramme du clutter pour les fortes valeurs du module du signal reçu en raison d'un nombre insuffisant d'évènements répertoriés. Elle consiste à mesurer la forme de l'histogramme du clutter dans le domaine des faibles et moyennes valeurs du module du signal reçu et à interpoler sa forme dans le domaine des fortes valeurs du module du signal reçu au moyen d'un modèle défini analytiquement qui cadre bien avec la partie mesurée de l'histogramme du clutter dans le domaine des faibles et moyennes valeurs de module du signal reçu et dont le comportement pour les fortes valeurs du module du signal reçu rappelle celui des lois de type de Rayleigh, gaussienne ou log-normale.

Elle a pour objet un procédé de réglage du seuil de détection d'un radar consistant :

- à partager en secteurs, le domaine surveillé par le radar en une période de balayage,
- à établir, pour chaque secteur, l'histogramme y(x) reliant les valeurs possibles x des modules des signaux reçus par le radar sur le secteur considéré en une période de balayage, à leurs fréquences d'apparition y,
- à approximer l'histogramme y(x) mesuré pour chaque secteur à l'aide d'au moins un modèle m(x) qui est défini analytiquement par une équation de variable x comportant une fonction exponentielle portant sur un polynôme en x et/ou un polynôme en logarithme de x dont les coefficients sont ajustés de manière à minimiser les écarts entre le modèle m(x) et l'histogramme mesuré y(x), et
- à déduire, pour chaque secteur, la valeur S du seuil de détection du radar d'une valeur de probabilité de fausse alarme de consigne Pfa par mise en oeuvre de la relation avec le modèle :

$$Pfa \times N = \int_S^\infty m(x)\, dx$$

N étant le nombre total des valeurs des modules des signaux reçus répertoriées dans le modèle.

De manière générale, le modèle m(x) est défini de manière analytique par une équation du type :

$$m(x) = \exp\left[\sum_i a_i \ln^i(x) + \sum_j b_j x^j\right]$$

Dans la pratique, il suffit que le modèle soit défini par l'équation réduite :

$$m_5(x) = \exp\left[a_2 l_n^2(x) + a_2 \ln(x) + c + b_2 x^2 + b_1 x\right]$$

Réduit à une équation de la forme :

$$m_2(x) = exp\left[a_2 l_n^2(x) + a_1 ln(x) + a_0\right]$$

le modèle peut simuler une loi de type log-normale

$$y = \frac{1}{\alpha\,x}\,exp\left[-\frac{(ln(x) - \beta)^2}{\gamma}\right]$$

tandis que réduit à une équation de la forme

$$m_3(x) = exp\left[a_1 ln(x) + c + b_2\,x^2\right]$$

le modèle peut simuler une loi de type de Rayleigh

$$y = \frac{x}{\delta}\,exp\left(-\frac{x^2}{\delta}\right)$$

L'invention a également pour objet un radar mettant en oeuvre le procédé précité.

D'autres caractéristiques et avantages de l'invention ressortiront de la description ci-après de plusieurs modes de mise en oeuvre donnés à titre d'exemple. Cette description sera faite en regard du dessin dans lequel :

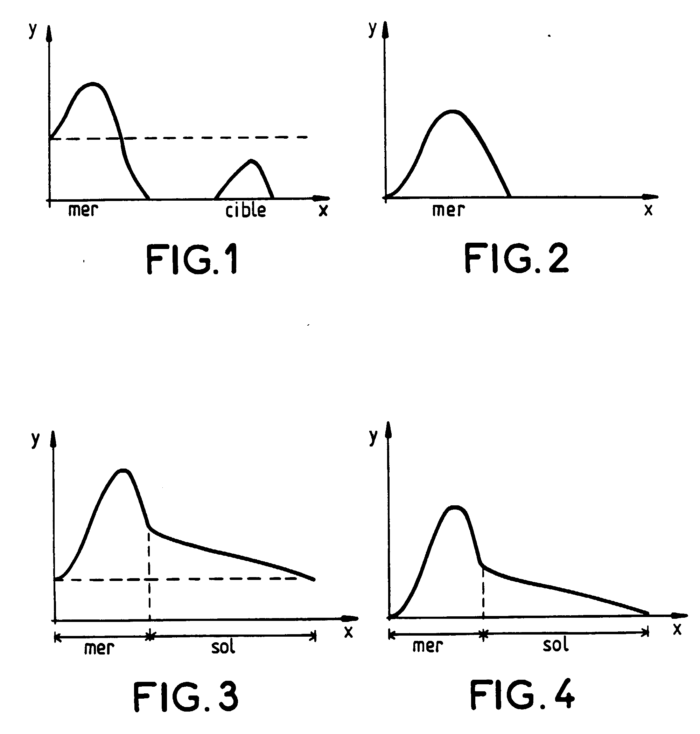

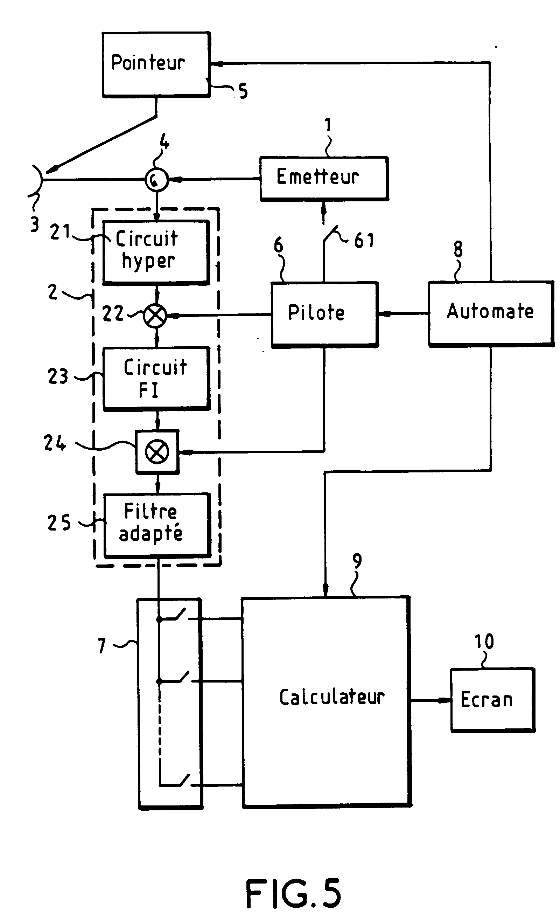

- une figure 1 illustre une forme typique d'histogramme telle qu'elle pourrait être relevée en répertoriant les amplitudes de signal reçu dans les cases distance-pointage d'un secteur de balayage de radar contenant essentiellement du clutter de mer et quelques cibles marines ;
- une figure 2 illustre la forme prise par l'histogramme de la figure 1 sous l'effet d'un sous-échantillonnage des cases distance-pointage du secteur considéré ;
- une figure 3 illustre une forme typique d'histogramme telle qu'elle pourrait être relevée en répertoriant les amplitudes de signal reçu dans les cases distance-pointage d'un secteur de balayage de radar contenant du clutter de mer en majorité et des échos de côte ;
- une figure 4 illustre la forme prise par l'histogramme de la figure 3 sous l'effet d'un sous-échantillonnage des cases distance-pointage du secteur considéré ; et
- une figure 5 représente, de manière schématique, la constitution d'un radar cohérent à impulsions mettant en oeuvre le procédé de réglage de seuil de détection conforme à l'invention.

On se propose de maîtriser le taux de fausse alarme d'un radar regardant la mer, c'est-à-dire de s'affranchir des échos perturbateurs engendrés par le retour de mer ou clutter de mer parmi la mosaïque des cases élémentaires distance-pointage dans laquelle un radar décompose son domaine de surveillance.

Il est bien connu que le clutter de mer a une répartition inhomogène dans le domaine surveillé et qu'il est notamment beaucoup plus dense dans la zone sous le vent. En outre, il suit une loi de densité de probabilité de forme très variable dépendant de la hauteur des vagues et de l'angle sous lequel elles sont vues par le radar. C'est ainsi qu'il répond à une loi de densité de probabilité du type log-normal de la forme

$$y = \frac{1}{a\,x}\,exp\left[-\frac{ln(x/b)^2}{c}\right]$$

à faible distance du radar et cela d'autant plus que la mer est formée, et à une loi de densité de probabilité de type de Rayleigh

$$y = \frac{x}{a} \, exp\left( - \frac{x^2}{a} \right)$$

au-delà d'une certaine distance dite de transition à partir de laquelle les vagues vues du radar se masquent entre elles. Pour de plus amples détails sur le clutter de mer, on peut se reporter au livre de Merril I.SKOLNIK intitulé "Radar Handbook" et publié par Mc Graw-Hill.

En outre, l'élimination du clutter de mer pose le problème des échos des côtes qui ne doivent pas lui être confondus sous peine de faire artificiellement monter la valeur du seuil de détection et de désensibiliser le radar dans les zones côtières.

Pour tenir compte de la non homogénéité du clutter de mer dans le domaine surveillé par le radar, on partage ce domaine en secteurs suffisamment petits pour retrouver une certaine homogénéité sans pour autant atteindre l'échelle des cases distance-pointage, et on adopte dans ces secteurs les valeurs de niveau de seuil de détection permettant de respecter une valeur commune de consigne de probabilité de fausse alarme. Par exemple on découpe le domaine de surveillance d'un radar effectuant un tour complet d'horizon en secteurs de 18 degrés de large sur une profondeur correspondant au dixième de la portée contenant chacun plusieurs dizaines de milliers de cases distance-pointage.

La méconnaissance de la loi de densité de probabilité f(x) suivie par le clutter de mer dans un secteur ne permet pas de déduire la valeur S du niveau de seuil de détection de la relation de définition qui le lie à la valeur Pfa de probabilité de fausse alarme :

$$P \, fa = \int_{S}^{\infty} \; f( \; x \; ) \, dx$$

On peut cependant contourner cette difficulté et obtenir la valeur du niveau de seuil de détection par la relation :

$$P \, fa = \lim_{N \to \infty} \frac{1}{N} \int_{S}^{\infty} \; y( \; x \; ) \, dx$$

où y(x) est l'histogramme du clutter de mer dans le secteur considéré et N le nombre d'évènements répertoriés dans l'histogramme. En effet, bien que l'on ne connaisse pas la forme générale y(x) de l'histogramme du clutter de mer sur le secteur considéré, on peut l'extrapoler à partir de son comportement local dans l'intervalle où sont répertoriées les amplitudes de signal de clutter de mer apparaissant le plus fréquemment qui est un intervalle sur lequel l'histogramme du clutter de mer se confond avec l'histogramme des amplitudes de signal reçu sur un sous-échantillonnage des cases distance-pointage du secteur considéré dès que ce sous-échantillonnage rassemble plusieurs milliers de cases distance-pointage.

On profite du fait que l'influence du clutter de mer soit séparable de celle des échos de cible ou de côte dans cet intervalle de variation de l'histogramme des amplitudes de signal reçu sur un sous-échantillonnage des cases distance-pointage du secteur considéré, pour extraire cet intervalle de variation et l'utiliser pour modéliser la forme générale de l'histogramme du clutter de mer par une courbe m(x) définie analytiquement.

Pour la mise en oeuvre de cette méthode, après avoir partagé le domaine maritime de surveillance du radar en secteurs contenant plusieurs dizaines de milliers de cases distance-pointage, on adopte un sous-échantillonnage des secteurs prenant en compte au moins 2.000 cases distance-pointage dans chaque secteur et l'on trace pour chaque secteur l'histogramme reliant les amplitudes de signal reçu sur le sous-échantillonnage de cases distance-pointage à leurs fréquences d'apparition. En fait, comme le signal reçu et démodulé par le radar se présente sous une forme complexe avec une composante en phase et une composante en quadrature c'est son module qui tient lieu d'amplitude. De plus, comme ce signal reçu a pu subir divers traitements avant d'être exploité dans les cases distance-pointage, l'histogramme relevé peut débuter par une série de zéros qui perturberait la modélisation et que l'on supprime par un recentrage consistant à translater l'histogramme relevé de manière à ramener à un la première amplitude répertoriée de signal reçu.

Une fois relevé l'histogramme des amplitudes de signal reçu sur un sous-échantillonnage des cases distance-pointage du secteur considéré on sélectionne dans celui-ci l'intervalle de variation correspondant aux amplitudes de signal reçu les plus fréquentes tout en s'assurant que celui-ci n'est dû qu'au clutter de mer.

La figure 1 illustre une forme typique d'histogramme, tracée avec une échelle logarithmique de fréquence d'évènements, telle qu'elle pourrait être relevée en répertoriant les amplitudes des signaux reçus dans l'ensemble des cases distance-pointage d'un secteur du domaine maritime de surveillance d'un radar contenant du clutter de mer et des échos de cibles marines faibles en nombre et forts en amplitude mais pas d'écho de côte. Cette forme présente deux bosses. La première bosse, qui est de loin la plus importante, répertorie des amplitudes faibles de signal reçu apparaissant fréquemment et dues uniquement au clutter de mer tandis que la deuxième bosse, qui est de moindre importance, répertorie des amplitudes plus fortes de signal reçu peu fréquentes et dues pour l'essentiel aux cibles marines.

Un trait horizontal en pointillés matérialise l'effet du sous-échantillonnage des cases distance-pointage qui diminue, dans un certain rapport, le nombre de cases distance-pointage répertoriées ce qui revient à rehausser l'axe des abscisses puisqu'il y a en ordonnée une échelle logarithmique de fréquence d'évènements. Cela a pour conséquence d'atténuer la première bosse due au clutter de mer et de faire pratiquement disparaître la deuxième bosse due aux cibles marines si bien qu'en sous-échantillonnant on relève la forme d'histogramme représentée à la figure 2 qui se limite à la première bosse due au clutter de mer. Dans la pratique, le sous-échantillonnage peut laisser subsister dans l'histogramme relevé deux bosses l'une importante engendrée par le clutter de mer, l'autre beaucoup plus petite engendrée par les échos de cibles marines mais ces deux bosses sont toujours séparées par un intervalle vide d'échantillons qu'il est possible d'exploiter pour mettre fin à l'intervalle de variation sélectionné. Ainsi on sélectionnera l'intervalle de variation sur lequel l'histogramme relevé correspond à l'histogramme du clutter de mer en déterminant l'amplitude x max de signal reçu rencontrée avec la plus grande fréquence d'apparition y max et en adoptant comme début d'intervalle de variation la première valeur d'abscisse correspondant au minimum à une amplitude x max/2 et, comme fin d'intervalle de variation la première valeur d'abscisse supérieure à x max pour laquelle la fréquence d'apparition s'annule.

La figure 3 illustre une autre forme typique d'histogramme, tracée avec en ordonnée une échelle logarithmique de fréquences d'évènements, qui pourrait être relevée en répertoriant les amplitudes de signal reçu dans l'ensemble des cases distance-pointage d'un secteur du domaine maritime de surveillance d'un radar contenant une majorité de clutter de mer et quelques échos de côte ou clutter de sol. Cette forme présente une seule bosse due à des amplitudes faibles de signal reçu apparaissant fréquemment qui sont engendrées par le clutter de mer. Cette bosse due au clutter de mer a sa base élargie, du côté des fortes amplitudes des signaux reçus, par le clutter de sol qui se manifeste par des échos de forte amplitude étalés en puissance.

Comme précédemment dans la figure 1, un trait horizontal tracé en pointillés dans cette figure 3 matérialise l'effet du sous-échantillonnage des cases distance-pointage du secteur considéré. Le sous-échantillonnage qui diminue d'un certain rapport le nombre de cases distance-pointage répertoriées revient à rehausser l'axe des abscisses puisqu'il y a en ordonnée une échelle logarithmique de fréquence d'évènements. Cela a pour conséquence d'atténuer la hauteur de la bosse de l'histogramme sans modifier sa base élargie due à la contribution du clutter de sol qui ne disparaît pas du nouvel histogramme obtenu représenté à la figure 4. Ainsi, si l'on se contente du critère de choix d'intervalle de variation établi précédemment pour un secteur ne comportant pas de zone côtière, l'intervalle de variation sélectionné ne conviendra pas puisqu'il sera en partie influencé par du clutter de sol.

Pour éviter cet inconvénient, on modifie le critère de choix de la fin de l'intervalle de variation en remarquant qu'il faut arrêter l'intervalle de variation sélectionné à la rupture de pente caractéristique qui se produit au début de la contribution du clutter de sol à la déformation de la bosse engendrée par le clutter de mer dans l'histogramme des amplitudes de signal reçu sur un sous-échantillonnage des cases distance-pointage du secteur considéré.

Pour détecter cette rupture de pente dans l'histogramme mesuré, on s'intéresse à la partie de l'histogramme comprise entre le point dont l'abscisse correspond à la valeur d'amplitude x max la plus fréquemment rencontrée et la valeur maximale d'amplitude possible pour le signal reçu et on procède à un lissage de cette partie de l'histogramme par un moyennage sur une fenêtre glissante de plusieurs points de large suivi d'un calcul de dérivée première au point courant et d'une comparaison de la dérivée obtenue au point courant avec la moyenne des dérivées obtenues sur plusieurs points précédents, une rupture de pente étant détectée dès que la dérivée au point courant dépasse d'un certain pourcentage la moyenne des dérivées obtenues sur les plusieurs points précédents.

Si l'intervalle de variation sélectionné se révèle être d'une trop faible étendue par exemple moins de 20 valeurs d'amplitudes de signal reçu, on arrête le processus et on détermine le niveau de seuil de détection dans le secteur considéré par la méthode de moyennage usuelle.

Après avoir relevé l'histogramme des amplitudes de signal reçu sur un sous-échantillonnage des cases distance-pointage d'un secteur et isolé dans cet histogramme un intervalle de variation d'étendue suffisante qui correspond aux amplitudes de signal reçu les plus fréquentes et où se manifeste quasi exclusivement le clutter de mer, on passe à la modélisation de l'histogramme du clutter de mer à l'aide d'un modèle analytique ajusté pour suivre, dans ledit intervalle de variation sélectionné, la forme de l'histogramme issu du sous-échantillonnage.

Comme il s'agit de clutter de mer, on adopte pour modéliser son histogramme, un modèle analytique pouvant prendre la forme d'une loi de type de Rayleigh ou de type log-normale. Ce modèle est défini de manière générale par l'équation en x

$$m(x) = \exp\left[ \sum_i a_i \ln^i(x) + \sum_j b_j x^j \right]$$

où les $a_i$ les $b_j$ sont des coefficients ajustables.
Réduit à une équation de la forme :

$$m_1(x) = \exp\left[ a_2 \ln^2(x) + a_1 \ln(x) + a_0 \right]$$

le modèle peut simuler une loi de type log-normale. En effet :

$$\ln\left[ m_1(x) \right] = a_2 \ln^2(x) + a_1 \ln(x) + a_0$$

d'où :

$$\ln\left[ \frac{m_1(x)}{x^{a_1}} \right] = a_2 \ln^2(x) + a_0$$

$$m_1(x) = x^{a_1} \exp\left[ a_2 \ln^2(x) + a_0 \right]$$

qui peut se mettre après un changement de coefficients sous la forme :

$$m_1(x) = \frac{1}{\lambda x} \exp\left[ -\frac{(\ln(x) - \beta)^2}{\gamma} \right]$$

Réduit à une équation de la forme :

$$m_2(x) = \exp\left[ a_1 \ln(x) + c + b_2 x^2 \right]$$

le modèle peut simuler une loi de Rayleigh. En effet :

$$\ln\left[ m_2(x) \right] = a_1 \ln(x) + c + b_2 x^2$$

d'où :

$$\ln\left[ \frac{m_2(x)}{x^{a_2}} \right] = c + b_2 x^2$$

$$m_2(x) = x^{-a_2} \exp\left( b_2 x^2 + c \right)$$

qui peut se mettre après un choix adéquat des coefficients sous la forme :

$$y = \frac{x}{\delta} \, e \, x \, p \left( - \frac{x^2}{\delta} \right)$$

Le choix des coefficients s'effectue de manière à minimiser l'erreur quadratique moyenne. Soient $y_k$, $x_k$ les coordonnées des points de l'intervalle de variation sélectionné dans l'histogramme des amplitudes de signal reçu relevées dans le sous-échantillonnage des cases distance-pointage du secteur considéré. L'erreur quadratique e de modélisation vaut :

$$e = \sum_{k} \left[ y_k - m\left(x_k\right) \right]^2$$

On la minimise en cherchant, conformément à la méthode des moindres carrés, à ajuster les coefficients $a_i$ et $b_j$ du modèle m(x) de manière à annuler ses dérivées par rapport aux divers coefficients. On obtient alors un système d'équations :

$$\frac{d\,e}{d\,a_0} = 0$$

$$\frac{d\,e}{d\,a_1} = 0$$

$$\vdots$$

$$\frac{d\,e}{d\,b_0} = 0$$

$$\frac{d\,e}{d\,b_1} = 0$$

$$\vdots$$

permettant de déterminer les divers coefficients.

Avec cette méthode des moindres carrés, la détermination des coefficients du modèle réduit à l'équation

$$m_3(\,x\,) = e\,x\,p \left[ \, a_2 \, l_n^2(\,x\,) + a_1 \, l\,n(\,x\,) + c + b_2\,x^2 \, \right]$$

qui lui permet de simuler à la fois une loi de type de rayleigh et une loi de type log-normale, conduit à la résolution du système matriciel :

$$\begin{bmatrix} \sum x^4 & \sum x^2 & \sum x^2 \ln(x) & \sum x^2 l_n^2(x) \\ \sum x^2 & n & \sum \ln(x) & \sum l_n^2(x) \\ \sum x^2 \ln(x) & \sum \ln(x) & \sum l_n^2(x) & \sum l_n^3(x) \\ \sum x^2 l_n^2(x) & \sum l_n^2(x) & \sum l_n^3(x) & \sum l_n^4(x) \end{bmatrix} \begin{bmatrix} b_2 \\ c \\ a_1 \\ a_2 \end{bmatrix} = \begin{bmatrix} \sum x^2 \ln(y) \\ \sum \ln(y) \\ \sum \ln(x) \ln(y) \\ \sum l_n^2(x) \ln(y) \end{bmatrix}$$

avec n égal au nombre d'échantillons $(y_k, x_k)$ et les différentes sommations prises sur la variable k évoluant de 1 à n.

Pour le modèle :

$$m_1( x ) = exp\left[ a_2 l_n^2( x ) + a_1 \ln( x ) + a_0 \right]$$

qui ne simule que les lois de type log-normale, la détermination des coefficients avec la méthode des moindres carrés revient à résoudre le système matriciel :

$$\begin{bmatrix} n & \sum \ln(x) & \sum l_n^2(x) \\ \sum \ln(x) & \sum l_n^2(x) & \sum l_n^3(x) \\ \sum l_n^2(x) & \sum l_n^3(x) & \sum l_n^4(x) \end{bmatrix} \begin{bmatrix} a_0 \\ a_1 \\ a_2 \end{bmatrix} = \begin{bmatrix} \sum \ln(y) \\ \sum \ln(y) \ln(x) \\ \sum \ln(y) l_n^2(x) \end{bmatrix}$$

qui se simplifie en effectuant le changement de variable :

$$u = \ln(x) \qquad v = \ln(y)$$

et devient :

$$\begin{bmatrix} n & \sum u & \sum u^2 \\ \sum u & \sum u^2 & \sum u^3 \\ \sum u^2 & \sum u^3 & \sum u^4 \end{bmatrix} \begin{bmatrix} a_0 \\ a_1 \\ a_2 \end{bmatrix} = \begin{bmatrix} \sum v \\ \sum v.u \\ \sum v.u^2 \end{bmatrix}$$

qui est l'expression d'une régression sur le polynôme

$$a_2.u^2 + a.u + a_0$$

avec la méthode des moindres carrés d'ordre 2.

On remarque également que pour un modèle

$$m_4( x ) = exp\left[ \ln( x ) + b_2 x^2 + b. x + b_0 \right]$$

qui peut se mettre sous la forme :

$$m_4( x ) = x\ exp\left[ b_2 x^2 + b_1 x + b_0 \right]$$

un changement de variable du type

$$w = \ln(y/x)$$

permet de ramener la détermination des coefficients du modèle à une régression polynomiale avec la méthode des moindres carrés d'ordre 2 plus simple à mettre en oeuvre que la méthode générale.

Il en résulte différentes possibilités pour la modélisation de l'histogramme du clutter et la détermination de la valeur du seuil de détection.

Selon une première méthode, on modélise l'histogramme du clutter à l'aide du modèle d'équation assez générale

$$m_3(x) = \exp\left[ a_2 l_n^2(x) + a_1 \ln(x) + c + b_2 x^2 \right]$$

dont on ajuste les coefficients $a_2$, $a_1$, c et $b_2$ de la manière qui vient d'être décrite. Puis on estime le seuil de détection S par la relation :

$$Pfa = \frac{1}{N} \int_s^\infty m_3(x)\, dx$$

N étant le nombre total d'évènements répertoriés dans l'histogramme modélisé.

Selon une deuxième méthode, on modélise l'histogramme du clutter à l'aide du modèle d'équation générale :

$$m_5(x) = \exp\left[ a_2 l_n^2(x) + a_1 \ln(x) + c + b_2 x^2 + b_1 x \right]$$

dont on ajuste les coefficients avec le critère des moindres carrés. Puis on examine quel est le coefficient $a_2$ ou $b_2$ le plus significatif. Si c'est le coefficient $a_2$, on simplifie le modèle en adoptant l'équation de définition :

$$m_1(x) = \exp\left[ a_2 l_n^2(x) + a_1 \ln(x) + a_0 \right]$$

dont on réajuste les coefficients $a_2$, $a_1$, $a_0$ par le critère des moindres carrés. Si c'est le coefficient $b_2$, on simplifie le modèle en adoptant l'équation de définition :

$$m_4(x) = x \exp\left[ b_2 x^2 + b_1 x + b_0 \right]$$

dont on réajuste les coefficients $b_2$, $b_1$, $b_0$ par le critère des moindres carrés. On estime enfin le seuil de détection S par la relation :

$$Pfa = \frac{1}{N} \int_s^\infty m(x)\, dx$$

m(x) étant le modèle choisi $m_1(x)$ ou $m_4(x)$ et N étant le nombre total d'évènements répertoriés dans l'histogramme modélisé.

L'avantage de cette deuxième méthode est la plus grande simplicité des modèles $m_1$ et $m_4$ comparés au modèle $m_5$. En effet, la loi de retour de mer étant stable temporellement on peut faire le calcul des coefficients du modèle général $m_5$ moins souvent que celui des coefficients des modèles particuliers $m_1$ ou $m_4$. On peut par exemple faire le calcul des coefficients du modèle général $m_5$ et le choix qui en découle d'un modèle particulier $m_1$ ou $m_4$ tous les p tours de balayage du radar, p étant plus grand que un et calculer les coefficients du modèle particulier $m_1$ ou $m_4$ choisi tous les tours.

Selon une troisième méthode, on modélise en parallèle l'histogramme du clutter à l'aide des deux modèles particuliers $m_1$ et $m_4$

$$m_1(x) = exp\left[a_2 l_n^2(x) + a_1 ln(x) + a_0\right]$$
$$m_4(x) = x\ exp\left[b_2 x^2 + b_1 x + b_0\right]$$

dont on détermine les coefficients avec le critère des moindres carrés. Puis on choisit celui des deux modèles particuliers $m_1$ et $m_4$ qui présente l'erreur quadratique la plus faible par rapport aux valeurs réelles relevées dans l'intervalle de variation sélectionné de l'histogramme issu du sous-échantillonnage afin d'estimer le seuil de détection S par la relation :

$$Pfa = \frac{1}{N}\int_s^\infty m(x)\,dx$$

m(x) étant le modèle choisi $m_1(x)$ ou $m_4(x)$ et N étant le nombre total d'évènements répertoriés dans l'histogramme modélisé.

En résumé, le procédé proposé pour la détermination des valeurs de réglage du seuil de détection d'un radar à balayage consiste à découper le domaine surveillé par le radar en secteurs regroupant plusieurs dizaines de milliers de cases distance-pointage et à calculer une valeur de seuil de détection pour chaque secteur selon le processus suivant :

1. Sous-échantillonage du secteur de manière à ne considérer au plus qu'une dizaine de milliers de cases distance-pointage.

2. Etablissement de l'histogramme reliant les différentes amplitudes de signal reçu à leurs fréquences d'apparition dans le sous-échantillonnage de cases distance-pointage.

3. Sélection d'un intervalle de variation dans l'histogramme qui vient d'être établi correspondant à du clutter, cet intervalle de variation incluant, de manière générale, les valeurs des amplitudes de signal reçu apparaissant le plus fréquemment.

4. Estimation de la forme générale de l'histogramme du clutter à l'aide d'un modèle m(x) défini de manière analytique et ajusté de manière à suivre, dans l'intervalle de variation sélectionné, la forme de l'histogramme relevé à partir du sous-échantillonnage.

5. Calcul de la valeur du seuil de détection S à partir de la consigne de probabilité de fausse alarme Pfa au moyen de la relation :

$$Pfa = \frac{1}{N}\int_s^\infty m(x)\,dx$$

N étant le nombre total d'évènements répertoriés dans l'histogramme modélisé.

Le modèle m(x) est de forme générale :

$$m(x) = exp\left[\sum_i a_i l_n^i(x) + \sum_j b_j x^j\right]$$

Il peut être de la forme :

$$m_1(x) = exp\left[a_2 l_n^2(x) + a_1 ln(x) + a_0\right]$$

Il est alors adapté à la loi log-normale.
Il peut également être de la forme :

$$m_2(x) = exp\left[a_1 ln(x) + c + b_2 x^2\right]$$

Il est alors adapté à la loi de Rayleigh.
Il peut aussi être de la forme :

$$m_3(x) = exp\left[a_2 l_n^2(x) + a_1 ln(x) + c + b_2 x^2\right]$$

Il est alors adapté aux lois log-normale et de Rayleigh.
Il peut aussi être de la forme plus générale :

$$m_5(x) = exp\left[a_2 l_n^2(x) + a_1 ln(x) + c + b_2 x^2 + b_1 x\right]$$

Il est alors adapté aux lois exponentielle, log-normale, gaussienne et de Rayleigh.

Le choix du ou des modèles à utiliser dépend du type de clutter. On remarque néanmoins que plus le modèle comporte de coefficients, plus il a tendance à diverger vers l'infini quand x augmente. On préfèrera donc utiliser des modèles comportant un faible nombre de coefficients pour extrapoler l'histogramme du clutter.

On distingue sur la figure 5 le schéma d'un radar cohérent à impulsions, avec une voie d'émission et une voie de réception, adapté à la mise en oeuvre du procédé de réglage de seuil de détection qui vient d'être décrit. Ce radar comporte un émetteur 1 et un récepteur 2 couplés à une antenne d'émission réception 3 par l'intermédiaire d'un duplexeur 4.

Un circuit de pointage 5 fournit à l'antenne 3 des ordres de pointage que celle-ci exécute soit de manière mécanique, soit de manière électronique de manière à couvrir un certain domaine de balayage.

Un circuit pilote 6 fournit à l'émetteur 1 une onde porteuse découpée en impulsions par l'intermédiaire d'un circuit de découpe 61 et au récepteur 2 diverses porteuses de démodulation.

Le récepteur 2 comporte, de manière classique, un circuit hyperfréquence 21 connecté à la sortie réception du duplexeur 4, un démodulateur haute fréquence 22 qui est excité par le circuit pilote 6 et qui transfère en bande de fréquence intermédiaire le signal délivré par le circuit hyperfréquence 21, un circuit de fréquence intermédiaire 23 connecté à la sortie du démodulateur haute fréquence 22, un démodulateur amplitude-phase 24 placé à la suite du circuit de fréquence intermédiaire 23 et excité par le circuit pilote 6, qui délivre, en bande vidéo, les composantes en phase et en quadrature des échos de réception, et un filtre 25 adapté à la forme des impulsions d'interrogation émises et connecté en sortie du démodulateur amplitude-phase 24.

Le récepteur 2 est suivi, de la manière habituelle, d'un banc d'échantillonneurs en distance 7 qui aiguille le signal reçu parmi différentes voies parallèles en fonction de son retard par rapport à la dernière impulsion d'interrogation émise.

Le radar comporte en outre un automate 8 et un calculateur 9 pourvu d'un écran de visualisation 10. L'automate 8 contrôle le circuit pilote 6 de manière à faire émettre par le radar des trains d'impulsions d'interrogation successives dits récurrences, et le circuit de pointage 5 de manière à faire balayer par l'antenne 3 le domaine surveillé par le radar. Le calculateur 9 reçoit du banc d'échantillonneurs en distance 7 les différentes voies distance, et de l'automate 8 des indications sur le chronométrage et la cadence des impulsions d'interrogation émises ainsi que sur le pointage de l'antenne. Il comporte, de façon classique, des moyens pour répartir, sous la commande l'automate 8, les échantillons complexes constitués de la composante en phase et de la composante en quadrature du signal reçu, démodulé et échantillonné, disponibles sur les voies distance, dans des cases distance-pointage correspondant chacune à une direction donnée de pointage de l'antenne et à une distance donnée de cible dans cette direction de pointage, des moyens pour calculer les modules des échantillons complexes de signal contenus dans les cases distance-pointage, des moyens pour éventuellement effectuer une post intégration desdits modules sur la durée d'une récurrence et des moyens pour afficher sur l'écran de visualisation 10, les cases distance-pointage renfermant un signal dont le module dépasse un certain seuil dit seuil de détection.

Le calculateur comporte en outre, pour l'établissement des valeurs de seuil de détection :

- des moyens pour regrouper les cases distance-pointage en secteurs réalisant une partition du domaine surveillé par le radar,
- des moyens pour établir pour chaque secteur l'histogramme y(x) reliant, les valeurs possibles x des modules de signal reçu par le radar sur le secteur considéré en une période de balayage, à leurs fréquences d'apparition y dans un sous-échantillonnage des cases distance-pointage du secteur considéré,
- des moyens pour sélectionner dans l'histogramme y(x) un intervalle de variation incluant les valeurs de module apparaissant les plus fréquemment et correspondant quasi exclusivement à du clutter de mer,
- des moyens pour approximer l'intervalle de variation sélectionné à l'aide d'au moins un modèle défini analytiquement par une équation m(x) de variable x comportant une fonction exponentielle portant sur un polynôme en logarithme de x et/ou un polynôme en x, et
- des moyens de détermination d'une valeur de seuil de détection S pour chaque secteur opérant à partir d'une valeur de consigne de probabilité de fausse alarme Pfa par mise en oeuvre de la relation :

$$P\,f\,a = \frac{1}{N} \int_{s}^{\infty} m(x)\,d\,x$$

où N est le nombre total des valeurs de module de signal reçu répertorié dans le modèle.

Le calculateur peut être réalisé à l'aide de circuits spécialisés dans les différentes fonctions qui viennent d'être énumérées ou, plus simplement, à l'aide de circuits à microprocesseurs programmés de la manière adéquate.

## Revendications

1. Procédé de réglage du seuil de détection d'un radar, caractérisé en ce qu'il consiste :

   - à partager en secteurs le domaine surveillé par le radar en une période de balayage,
   - à établir, pour chaque secteur, l'histogramme y(x) reliant les valeurs x possibles des modules des signaux reçus par le radar sur le secteur considéré en une période de balayage, à leurs fréquences d'apparition y,
   - à approximer l'histogramme y(x) mesuré pour chaque secteur à l'aide d'au moins un modèle m(x) qui est défini analytiquement par une équation de variable x comportant une fonction exponentielle portant sur un polynôme en logarithme de x et/ou un polynôme en x dont les coefficients sont ajustés de manière à minimiser les écarts entre le modèle m(x) et l'histogramme mesuré, et
   - à déduire, pour chaque secteur, la valeur S du seuil de détection du radar d'une valeur de probabilité de fausse alarme de consigne Pfa par mise en oeuvre de la relation avec le modèle :

   $$P\,f\,a \times N = \int_{s}^{\infty} m(x)\,d\,x$$

   N étant le nombre total des valeurs des modules des signaux reçus répertoriées dans le modèle.

2. Procédé selon la revendication 1, caractérisé en ce que l'établissement d'un histogramme y(x) sur un secteur se fait à partir d'un échantillonnage des valeurs x des modules des signaux reçus par le radar sur le secteur considéré au cours d'une période de balayage.

3. Procédé selon la revendication 1, caractérisé en ce qu'il consiste en outre, après l'établissement d'un histogramme et avant son approximation par au moins un modèle, à ne retenir dans l'histogramme que les points situés dans un intervalle de variation autour de la fréquence maximum d'apparition dit intervalle de validité.

4. Procédé selon la revendication 3, caractérisé en ce que ledit intervalle de variation auquel est limité l'histogramme débute avec la plus petite valeur de module de signal reçu apparaissant avec une fréquence égale à la moitié de la fréquence maximum d'apparition d'une valeur de module du signal reçu et s'arrête à la plus petite valeur de module de signal reçu qui soit à la fois supérieure à celle ayant la fréquence maximum d'apparition et pour laquelle la fréquence d'apparition s'annule.

5. Procédé selon la revendication 3, caractérisé en ce que l'on détecte les ruptures de pente de l'histogramme sur son versant tourné vers les plus grandes valeurs des modules des signaux reçus et que l'on arrête l'intervalle de variation à la première rupture de pente détectée.

6. Procédé selon la revendication 5, caractérisé en ce que l'on détecte les ruptures de pente de l'histogramme en effectuant un lissage par moyennage sur une fenêtre glissante de plusieurs points de large suivi d'un calcul de la dérivée première de l'histogramme lissé et d'une détection de cassure dès que la dérivée au point courant diffère d'un certain pourcentage de la moyenne de plusieurs des dérivées calculées précédemment.

7. Procédé selon la revendication 1, caractérisé en ce que le modèle $m_5(x)$ utilisé est défini de manière analytique par l'équation :

$$m_5(x) = \exp\left[a_2 \ln^2(x) + a_1 \ln(x) + c + b_2 x^2 + b_1 x\right]$$

$a_1$, $a_2$, $b_1$, $b_2$ et c étant des coefficients ajustés de manière à minimiser les écarts entre le modèle et l'histogramme mesuré.

8. procédé selon la revendication 1, caractérisé en ce que le modèle utilisé $m_3(x)$ est défini de manière analytique par l'équation :

$$m_3(x) = \exp\left[a_2 \ln^2(x) + a_1 \ln(x) + c + b_2 x^2\right]$$

$a_1$, $a_2$, $b_2$ et c étant ajustés de manière à minimiser les écarts entre le modèle et l'histogramme mesuré.

9. Procédé selon la revendication 7, caractérisé en ce que, avant d'utiliser le modèle pour la détermination de la valeur du seuil de détection, on compare ses coefficients $a_2$ et $b_2$ pour ne conserver que le plus influent et ramener le modèle sur plusieurs périodes de balayage consécutives soit à la forme

$$m_1(x) = \exp\left[a_2 \ln^2(x) + a_1 \ln(x) + a_0\right]$$

soit à la forme

$$m_2(x) = \exp\left[a_1 \ln(x) + c + b_2 x^2\right]$$

10. Procédé selon la revendication 1, caractérisé en ce que l'on fait appel à deux modèles, l'un défini de manière analytique par l'équation :

$$m_1(x) = \exp\left[a_2 \ln^2(x) + a_1 \ln(x) + a_0\right]$$

$a_0$, $a_1$, $a_2$ étant des coefficients ajustés de manière à minimiser les écarts du modèle avec l'histogramme mesuré l'autre défini de manière analytique par l'équation:

$$m_6(x) = x \, \exp\left(d_2 x^2 + d_1 x + d_0\right)$$

$d_0$, $d_1$, $d_2$ étant des coefficients ajustés de manière à minimiser les écarts du modèle avec l'histogramme mesuré et en ce que l'on choisit pour la détermination du seuil de détection celui des deux modèles présentant les écarts les plus faibles par rapport à l'histogramme mesuré.

**11.** procédé selon la revendication 1, dans lequel on utilise un modèle défini de manière analytique par l'équation :

$$m_1(x) = exp\left[a_2 \, l_n^2(x) + a_1 \, ln(x) + a_0\right]$$

caractérisé en ce que, pour la détermination des valeurs des coefficients $a_2$, $a_1$ et $a_0$ minimisant les écarts entre le modèle et l'histogramme mesuré y(x), on procède aux changements de variables :

$$u = ln(x) \qquad et \qquad v = ln(y)$$

suivis d'une régression polynomiale mettant en oeuvre la méthode des moindres carrés d'ordre 2.

**12.** Procédé selon la revendication 1, dans lequel on utilise un modèle défini de manière analytique par l'équation :

$$m_4(x) = x \, exp\left(b_2 \, x^2 + b_1 \, x + b_0\right)$$

caractérisé en ce que, pour la détermination des valeurs des coefficients $b_0$, $b_1$, $b_2$ minimisant les écarts entre le modèle et l'histogramme mesuré on procède au changement de variable

$$w = ln(y/x)$$

suivi d'une régression polynomiale mettant en oeuvre la méthode des moindres carrés d'ordre 2.

**13.** Radar à impulsions pour la mise en oeuvre du procédé selon l'une des revendications précédentes, comportant un émetteur (1) émettant des impulsions d'interrogation par l'intermédiaire d'une antenne (3) afin de balayer le domaine surveillé par le radar, un récepteur (2), un banc de portes distance (7) qui est connecté en sortie du récepteur (2) et qui aiguille le signal reçu parmi différentes voies parallèles en fonction de son retard par rapport à la dernière impulsion émise et donc de la distance de l'obstacle à l'origine de l'écho en retour, et un calculateur (9) connecté aux sorties du banc de portes distance (7) et du pointeur (5) comportant des moyens pour répartir, sous la commande du pointeur (5), les échantillons complexes constitués d'une composante en phase et d'une composante en quadrature du signal reçu, démodulé et échantillonné disponibles en sortie du banc de portes distance (7), dans des cases distance-pointage couvrant le domaine surveillé par le radar, ledit radar étant caractérisé en ce que le calculateur (9) comporte en outre :

- des moyens pour regrouper les cases distance-pointage en secteurs réalisant une partition du domaine surveillé par le radar,
- des moyens pour établir pour chaque secteur, l'histogramme y(x) reliant les valeurs x possibles des modules du signal reçu par le radar sur le secteur considéré en une période de balayage, à leurs fréquences d'apparition dans les cases distance-pointage du secteur considéré,
- des moyens pour approximer l'histogramme y(x) mesuré pour chaque secteur à l'aide d'au moins un modèle m(x) défini analytiquement par une équation de variable x comportant une fonction exponentielle portant sur un polynôme en logarithme de x et/ou un polynôme en x,
- des moyens de calcul pour déduire, pour chaque secteur, la valeur S du seuil de détection du radar, d'une valeur de probabilité de fausse alarme de consigne Pfa par mise en oeuvre de la relation avec la définition analytique du modèle :

$$Pfa \times N = \int_{S}^{\infty} m(x) \, dx$$

N étant le nombre total des valeurs des modules des signaux reçus répertoriées dans le modèle.

**Patentansprüche**

1. Verfahren zum Einstellen des Erfassungsschwellenwerts eines Radars, dadurch gekennzeichnet, daß es darin besteht:

   - das vom Radar in einer Abtastperiode überwachte Gebiet in Sektoren zu unterteilen,
   - für jeden Sektor ein Histogramm y(x) herzustellen, das die möglichen Werte x der Beträge der vom Radar im betrachteten Sektor in einer Abtastperiode empfangenen Signale mit ihren Auftrittshäufigkeiten y in Beziehung setzt,
   - das für jeden Sektor gemessene Histogramm y(x) mit Hilfe wenigstens eines Modells m(x) zu approximieren, welches analytisch durch eine Gleichung mit einer Variablen x definiert ist, die eine Exponentialfunktion enthält, die auf einem Polynom des Logarithmus von x und/oder auf einem Polynom von x basiert, deren Koeffizienten in der Weise eingestellt sind, daß die Abweichungen zwischen dem Modell m(x) und dem gemesssenen Histogramm minimal sind, und
   - für jeden Sektor den Wert S des Erfassungsschwellenwerts des Radars aus einem Wert für die Wahrscheinlichkeit des Soll-Fehlalarms Pfa abzuleiten, indem die folgende Beziehung mit dem Modell ausgeführt wird:

   $$\mathrm{Pfa} \times \mathrm{N} = \int_{\mathrm{S}}^{\infty} \mathrm{m(x)dx} \,,$$

   wobei N die Gesamtzahl der Werte der Beträge der empfangenen Signale ist, die im Modell verzeichnet sind.

2. Verfahren nach Anspruch 1, dadurch gekennzeichnet, daß die Herstellung eines Histogramms y(x) in einem Sektor ausgehend von einer Abtastung der Werte x der Beträge der vom Radar im betrachteten Sektor während einer Abtastperiode empfangenen Signale erfolgt.

3. Verfahren nach Anspruch 1, dadurch gekennzeichnet, daß es außerdem darin besteht, nach der Herstellung eines Histogramms und vor dessen Approximation durch wenigstens ein Modell im Histogramm nur diejenigen Punkte zu halten, die sich in einem Veränderungsintervall um die maximale Auftrittshäufigkeit, welches Gültigkeitsintervall genannt wird, befinden.

4. Verfahren nach Anspruch 3, dadurch gekennzeichnet, daß das Veränderungsintervall, auf das das Histogramm eingeschränkt ist, mit dem kleinsten Wert des Betrags des empfangenen Signals beginnt, der mit einer Häufigkeit auftritt, die gleich der Hälfte der maximalen Auftrittshäufigkeit eines Werts des Betrags des empfangenen Signals ist, und beim kleinsten Wert des Betrags des empfangenen Signals endet, der größer als jener ist, der die maximale Auftrittshäufigkeit besitzt und für den gleichzeitig die Auftrittshäufigkeit verschwindet.

5. Verfahren nach Anspruch 3, dadurch gekennzeichnet, daß die Knicke der Steigung des Histogramms auf dessen zu den größten Werten der Beträge der empfangenen Signale weisenden Flanke erfaßt werden und daß das Veränderungsintervall beim ersten Knick der erfaßten Steigung endet.

6. Verfahren nach Anspruch 5, dadurch gekennzeichnet, daß die Knicke der Steigung des Histogramms dadurch erfaßt werden, daß eine Glättung durch Mittelung in einem gleitenden Fenster mit einer Breite von mehreren Punkten ausgeführt wird, gefolgt von einer Berechnung der ersten Ableitung des geglätteten Histogramms und von einer Ermittlung einer Knickstelle, sobald sich die Ableitung im momentanen Punkt vom Mittelwert aus mehreren vorher berechneten Ableitungen um einen bestimmten Prozentsatz unterscheidet.

7. Verfahren nach Anspruch 1, dadurch gekennzeichnet, daß das verwendete Modell $m_5(x)$ auf analytische Weise durch die folgende Gleichung definiert ist:

   $$\mathrm{m_5(x) = exp}\left[\mathrm{a_2 \, ln^2(x) + a_1 \, ln(x) + c + b_2 x^2 + b_1 x}\right],$$

   wobei $a_1$, $a_2$, $b_1$, $b_2$ und c Koeffizienten sind, die in der Weise eingestellt sind, daß die Abweichungen zwischen dem Modell und dem gemessenen Histogramm minimal sind.

8. Verfahren nach Anspruch 1, dadurch gekennzeichnet, daß das verwendete Modell $m_3(x)$ analytisch durch die folgende Gleichung definiert ist:

$$m_3(x) = \exp\left[a_2 \ln^2(x) + a_1 \ln(x) + c + b_2 x^2\right],$$

wobei $a_1$, $a_2$, $b_2$ und c in der Weise eingestellt sind, daß die Abweichungen zwischen dem Modell und dem gemessenen Histogramm minimal sind.

9. Verfahren nach Anspruch 7, dadurch gekennzeichnet, daß vor der Verwendung des Modells für die Bestimmung des Erfassungsschwellenwerts seine Koeffizienten $a_2$ und $b_2$ verglichen werden, um nur den einflußreichsten beizubehalten und das Modell auf mehrere aufeinanderfolgende Abtastperioden zurückzuführen, entweder mit der Form

$$m_1(x) = \exp\left[a_2 \ln^2(x) + a_1 \ln(x) + a_0\right]$$

oder mit der Form

$$m_2(x) = \exp\left[a_1 \ln(x) + c + b_2 x^2\right].$$

10. Verfahren nach Anspruch 1, dadurch gekennzeichnet, daß auf zwei Modelle zurückgegriffen wird, wovon eines analytisch durch die folgende Gleichung definiert ist:

$$m_1(x) = \exp\left[a_2 \ln^2(x) + a_1 \ln(x) + a_0\right],$$

wobei $a_0$, $a_1$, $a_2$ Koeffizienten sind, die in der Weise eingestellt sind, daß die Abweichungen des Modells vom gemessenen Histogramm minimal sind,
und wovon das andere analytisch durch die folgende Gleichung definiert ist:

$$m_6 = x \exp\left(d_2 x^2 + d_1 x + d_0\right),$$

wobei $d_0$, $d_1$, $d_2$ Koeffizienten sind, die in der Weise eingestellt sind, daß die Abweichungen des Modells vom gemessenen Histogramm minimal sind, und daß für die Bestimmung des Erfassungsschwellenwerts dasjenige der zwei Modelle gewählt wird, das in bezug auf das gemessene Histogramm die geringsten Abweichungen besitzt.

11. Verfahren nach Anspruch 1, in dem ein Modell verwendet wird, das analytisch durch die folgende Gleichung definiert ist:

$$m_1(x) = \exp\left[a_2 \ln^2(x) + a_1 \ln(x) + a_0\right],$$

dadurch gekennzeichnet, daß für die Bestimmung derjenigen Werte der Koeffizienten $a_2$, $a_1$ und $a_0$, die die Abweichungen zwischen dem Modell und dem gemessenen Histogramm $y(x)$ minimieren, die Variablen substituiert werden:

$$u = \ln(x) \text{ und } v = \ln(y),$$

gefolgt von einer Polynom-Regression, die das Verfahren der kleinsten Quadrate der Ordnung 2 benutzt.

12. Verfahren nach Anspruch 1, in dem ein Modell verwendet wird, das analytisch durch die folgende Gleichung definiert ist:

$$m_4(x) = x \exp\left(b_2 x^2 + b_1 x + b_0\right),$$

dadurch gekennzeichnet, daß für die Bestimmung derjenigen Werte der Koeffizienten $b_0$, $b_1$, $b_2$, die die Beträge zwischen dem Modell und dem gemessenen Histogramm minimieren, die Variable substituiert wird:

$$w = \ln(y/x),$$

gefolgt von einer Polynom-Regression, die das Verfahren der kleinsten Quadrate der Ordnung 2 benutzt.

13. Impulsradar für die Ausführung des Verfahrens nach einem der vorangehenden Ansprüche, mit einem Sender (1), der über eine Antenne (3) Abfrageimpulse aussendet, um das vom Radar überwachte Gebiet abzutasten, einem Empfänger (2), einer Bank von Abstandstoren (7), die an den Ausgang des Empfängers (2) angeschlossen ist und die das empfangene Signal in Abhängigkeit von seiner Verzögerung in bezug auf den zuletzt ausgesendeten Impuls und daher in Abhängigkeit vom Abstand des Hindernisses vom Ausgangspunkt des zurückkehrenden Echos auf verschiedene Wege leitet, und einem Rechner (9), der an die Ausgänge der Bank von Abstandstoren (7) bzw. des Peilers (5) angeschlossen ist und Mittel enthält, um unter der Steuerung des Peilers (5) die komplexen Abtastwerte, die aus einer in Phase befindlichen Komponente und aus einer um 90° phasenverschobenen Komponente des empfangenen, demodulierten und abgetasteten Signals gebildet sind und am Ausgang der Bank von Abstandstoren (7) verfügbar sind, in Abstands/Peilungs-Felder einzuteilen, die das vom Radar überwachte Gebiet abdecken, dadurch gekennzeichnet, daß der Radar dadurch gekennzeichnet ist, daß der Rechner (9) außerdem enthält:

- Mittel zum Umgruppieren der Abstands/Peilungs-Felder in Sektoren, die einen Teilabschnitt des vom Radar überwachten Gebiets ergeben,
- Mittel zum Herstellen eines Histogramms y(x) für jeden Sektor, das die möglichen Werte x der Beträge des vom Radar im betrachteten Sektor in einer Abtastperiode empfangenen Signals mit ihren Auftrittshäufigkeiten in den Abstands/ Peilungs-Feldern des betrachteten Sektors in Beziehung setzt,
- Mittel zum Approximieren des gemessenen Histogramms y(x) für jeden Sektor mit Hilfe wenigstens eines Modells m(x), das analytisch durch eine Gleichung mit der Variablen x definiert ist, die eine Exponentialfunktion enthält, die auf einem Polynom des Logarithmus von x und/oder auf einem Polynom von x basiert,
- Rechenmittel, die für jeden Sektor den Wert S des Erfassungsschwellenwerts des Radars aus einem Wert für die Wahrscheinlichkeit des Soll-Fehlalarms Pfa ableiten, indem sie die folgende Beziehung mit der analytischen Definition des Modells ausführen:

$$Pfa \times N = \int_{S}^{\infty} m(x)dx,$$

wobei N die Gesamtzahl der Werte der Beträge der empfangenen Signale ist, die im Modell verzeichnet sind.

## Claims

1. Process for adjusting a radar detection threshold, characterized in that it consists in:

- breaking down into sectors the area monitored by the radar in one sweep period,
- for each sector, compiling the histogram y(x) relating the possible values x of signal moduli received by the radar in the sector considered during one sweep period, to their frequencies of appearance y,

- approximating the histogram y(x) measured for each sector by means of at least one model m(x) which is defined analytically by an equation of variable x containing an exponential function of a polynomial in log x and/or a polynomial in x, in which the coefficients are fitted so as to minimize the differences between the model m(x) and the measured histogram, and
- for each sector, deducing the value S of the radar detection threshold from a set value of the false alarm probability Pfa by using the relation with the model:

$$Pfa \times N = \int_{S}^{\infty} m(x) \, dx$$

where N is the total number of received signal moduli values listed in the model.

2. Process according to Claim 1, characterized in that the histogram y(x) for a sector is compiled from a sample of values x of signal moduli received by the radar in the sector considered during one sweep period.

3. Process according to Claim 1, characterized in that after compiling a histogram and before its approximation by at least one model, it also consists in keeping in the histogram only those points located within an interval of variation around the maximum frequency of appearance referred to as the validity interval.

4. Process according to Claim 3, characterized in that the said interval of variation limiting the histogram starts with the smallest value of received signal modulus appearing with a frequency equal to half the maximum frequency of appearance of a value of received signal modulus, and stops at the smallest value of received signal modulus that is both higher than that having the maximum frequency of appearance and for which the frequency of appearance becomes zero.

5. Process according to Claim 3, characterized in that slope changes are detected on the side of the histogram closest to the highest values of received signal moduli, and that the interval of variation is stopped at the first detected slope change.

6. Process according to Claim 5, characterized in that histogram slope changes are detected by smoothing by averaging over a sliding window several points wide followed by a calculation of the first derivative of the smoothed histogram and break detection when the derivative at the current point differs by a certain percentage from the average of several previously calculated derivatives.

7. Process according to Claim 1, characterized in that the model $m_5(x)$ used is defined analytically by the equation:

$$m_5(x) = exp\left[ a_2 \, l_n^2(x) + a_1 \, ln(x) + c + b_2 \, x^2 + b_1 \, x \right]$$

where $a_1$, $a_2$, $b_1$, $b_2$ and c are coefficients fitted so as to minimize the differences between the model and the measured histogram.

8. Process according to Claim 1, characterized in that the model used $m_3(x)$ is defined analytically by the equation:

$$m_3(x) = exp\left[ a_2 \, l_n^2(x) + a_1 \, ln(x) + c + b_2 \, x^2 \right]$$

where $a_1$, $a_2$, $b_2$ and c are fitted so as to minimize the differences between the model and the measured histogram.

9. Process according to Claim 7, characterized in that, before using the model to determine the value of the detection threshold, its coefficients $a_2$ and $b_2$ are compared so as to keep only the most influential one and reduce the model over several consecutive sweep periods either to the form

$$m_1(x) = exp\left[a_2 \ln^2(x) + a_1 \ln(x) + a_0\right]$$

or to the form

$$m_2(x) = exp\left[a_1 \ln(x) + c + b_2 x^2\right]$$

10. Process according to Claim 1, characterized in that two models are used, one defined analytically by the equation:

$$m_1(x) = exp\left[a_2 \ln^2(x) + a_1 \ln(x) + a_0\right]$$

where $a_0$, $a_1$, $a_2$ are coefficients fitted so as to minimize the differences between the model and the measured histogram and the other defined analytically by the equation:

$$m_6(x) = x \; exp\left(d_2 x^2 + d_1 x + d_0\right)$$

where $d_0$, $d_1$, $d_2$ are coefficients fitted so as to minimize the differences between the model and the measured histogram and in that, of the two, the model with the smallest differences with respect to the measured histogram is chosen to determine the detection threshold.

11. Process according to Claim 1, in which the model used is defined analytically by the equation:

$$m_1(x) = exp\left[a_2 \ln^2(x) + a_1 \ln(x) + a_0\right]$$

characterized in that the following changes of variable are made in order to determine the values of the coefficients $a_2$, $a_1$ and $a_0$ minimizing the differences between the model and the measured histogram $y(x)$:

$$u = \ln(x) \qquad \text{and} \qquad v = \ln(y)$$

followed by a polynomial regression using the least squares method of order 2.

12. Process according to Claim 1 using a model defined analytically by the equation:

$$m_4(x) = x \; exp\left(b_2 x^2 + b_1 x + b_0\right)$$

characterized in that, in order to determine values of the coefficients $b_0$, $b_1$, $b_2$ minimizing the differences between the model and the measured histogram, the following change of variable is made:

$$w = \ln(y/x)$$

followed by a polynomial regression using the least squares method of order 2.

13. Pulse radar for implementation of the process according to one of the previous claims, comprising a transmitter (1) transmitting interrogation pulses through an antenna (3) in order to sweep the area monitored by the radar, a receiver (2), a distance gate unit (7) which is connected to the receiver (2) output and which switches the received signal between different parallel channels as a function of its lag behind the latest transmitted pulse and therefore of the distance of the obstacle at the origin of the returned echo, and a computer (9) connected to the outputs of the distance gate unit (7) and of the pointer (5) including means for distributing, under the control of the pointer (5), the complex samples comprising a phase component and a quadrature component of the received, demodulated and sampled signal available at the output of the distance gate unit (7), in distance-pointing cells covering the area monitored by the radar, the said radar being characterized by the fact that the computer (9) also includes:

- means of grouping the distance-pointing cells into sectors partitioning the area monitored by the radar,
- means of compiling the histogram y(x) for each sector relating possible values x of signal moduli received by the radar in the sector considered during one sweep period, to their frequencies of appearance in the distance-pointing cells in the sector considered,
- means of approximating the histogram y(x) measured for each sector with the aid of at least one model m(x) defined analytically by an equation of variable x containing an exponential function of a polynomial in log x and/or a polynomial in x,
- for each sector, means of calculation for deducing the value S of the radar detection threshold from a set value of the false alarm probability Pfa by using the relation together with the analytical definition of the model:

$$Pfa \times N = \int_{S}^{\infty} m(x)\, dx$$

where N is the total number of received signal moduli values listed in the model.

FIG.1

FIG.2

FIG.3

FIG.4

FIG.5